# EUROPÄISCHE PATENTANMELDUNG

(11) **EP 1 801 517 A1**
(43) Veröffentlichungstag der Anmeldung: **27.06.2007**
(21) Anmeldenummer: 05027999.1
(22) Anmeldetag: 21.12.2005
(51) Int. Cl.: F24J 2/07, F24J 2/46

(54) **Receivertragwerk**

(71) Anmelder: NOVATEC BioSol AG, 76227 Karlsruhe (DE)
(72) Erfinder: Selig, Martin, 76137 Karlsruhe (DE)
(74) Vertreter: Geitz, Holger

(57) **Zusammenfassung**

Üblicherweise werden solarthermische Kraftwerke mit Receiveranordnungen ausgeführt, weiche aufgrund der zu erwartenden Längenausdehnung und -kontraktion des Absorberrohrs mehrstückig ausgebildet waren. Diese mehrstückige Ausbildung des Absorberrohrs führt jedoch zu einer geringeren Effizienz und zu größeren Kosten aufgrund von Schlauchanordnungen, die zwischen den Receiverrohrteilen für die Weiterleitung des verwendeten Mediums benötigt werden.
Daher lag der Erfindung die Aufgabe zugrunde, ein Receivertragwerk (2) zu schaffen, welches den Einsatz von einstückig ausgeführten Absorberrohren ermöglicht.
Dies gelingt mit dem erfindungsgemäßen Receivertragwerk, bei dem das Absorberrohr (1) auf Gleitelementen (3,3') aufgelagert ist und welches so die Längenausdehnung des Absorberrohrs nicht kompensiert sondern zulässt.

## Beschreibung

Die Erfindung betrifft ein Receivertragwerk zur erhöhten Aufständerung eines im Wesentlichen einstückigen Absorberrohrs gegenüber einer Mehrzahl von Heliostaten innerhalb eines solarthermischen Kraftwerks.

Solarthermische Kraftwerke arbeiten üblicherweise mit einer Spiegelanordnung und einem Wärmeaufnehmer, dem so genannten Receiver. Die Heliostaten des Heliostatenfeldes werden mithilfe von Motoren so geführt, dass darauf einfallendes Sonnenlicht reflektiert und auf den über den Spiegeln erhöht aufgeständerten Receiver gelenkt wird. Der Receiver weist bei einem einachsigen System ein oder mehrere Absorberrohre, bei einem zweiachsigen System ein Rohrbündel oder einen volumetrischen Absorber auf. Das Absorberrohr absorbiert die durch die Heliostaten konzentrierte Solarstrahlung und leitet mithilfe eines hindurchströmenden Mediums diese in Wärme umgewandelte Energie weiter. Mithilfe eines Wärmetauschers wird so Dampf erzeugt, welcher wiederum eine Turbine antreibt, mit deren Hilfe elektrischer Strom erzeugt wird. Im Laufe des Tages werden die Heliostaten je nach Sonnenstand so nachgeführt, dass das auf die Heliostaten einfallende Sonnenlicht stets auf den Receiver umgelenkt wird.

Üblicherweise sind Absorberrohre aus Edelstahl oder Kesselstahl gefertigt, so dass bei einer üblichen Länge von ca. 500 bis 800 Metern im Laufe eines Tages eine Längenausdehnung von bis zu ca. zwei Metern auftreten würde. Da eine solche auftretende Kraft in einem starr aufgeständerten Receiver zu Beschädigungen führen würde, sind Wege bekannt, diese Zerstörung zu umgehen.

Dazu ist es beispielsweise bekannt, das Absorberrohr mehrstückig auszubilden, wobei die metallischen Absorberrohrabschnitte von flexiblen Abschnitten, etwa Schläuchen oder Federbalge, unterbrochen sind. Jeder einzelne metallische Absorberrohrabschnitt ist dabei fix auf seiner Aufständerung aufgelagert, während die Schlauchabschnitte in den Zwischenräumen die temperaturbedingte Längenänderung ausgleichen. Die dennoch auftretenden Längenänderungen innerhalb dieser Abschnitte sind jedoch so gering, dass sie für die Stabilität der Aufständerung unbeachtlich sind.

Dies bringt jedoch auch Nachteile mit sich. Zunächst einmal sind die Schlauchabschnitte bezüglich der Energiegewinnung unwirksam. Sie nehmen nicht an der Erwärmung des in ihnen fließenden Mediums teil und vergeuden insofern einen nicht unerheblichen Anteil an Effizienz. Ferner stellt ihre Herstellung einen nennenswerten Kostenfaktor dar. Bei der Inbetriebnahme der Anlage kann es außerdem zu Dampfstößen kommen, da das einströmende Medium sich im heißen Rohr schlagartig erwärmt. Dieser resultierende Dampfdruckstoss stellt aufgrund der plötzlichen Dehnung eine große Belastung des Schlauchmaterials bzw. Balgs dar und führt leicht zu Beschädigungen.

Der Receiver ist im Betrieb von einem Sekundärspiegel umgeben, welcher einen zweistückigen, grob näherungsweise halbrunden, etwa konzentrischen aber beabstandeten Mantel um die obere Hälfte des Receivers darstellt. An dem Receiver vorbeigeleitete Lichtstrahlen treffen auf diesen Sekundärspiegel, welcher es nochmals zurückwirft und auf den Receiver lenkt. Der Sekundärspiegel ist im Wesentlichen aus Metallplatten hergestellt, welche selbstverständlich ebenfalls der Problematik der Längenausdehnung unterliegen. Hier kann dies jedoch so gelöst werden, dass die einzelnen Spiegelplatten überlappend aufgehängt werden und mithilfe von Langlöchern untereinander verbunden werden. Dieses Vorgehen ist aufgrund der geforderten Dichtigkeit des Absorberrohrs auf dieses nicht übertragbar.

Zur Erhöhung der Effizienz bei gleichzeitig sinkenden Herstellungskosten wäre es daher nötig, einstückig ausgeführte Absorberrohre zu verwenden. Aufgrund von deren zu erwartender täglicher Längenänderung von ca. zwei Metern ist es technisch nicht möglich, die herkömmlichen Methoden zur Aufständerung eines solchen Receivers einzusetzen.

Vor diesem Hintergrund liegt der Erfindung die Aufgabe zugrunde, ein Receivertragwerk bereitzustellen, welches die Verwendung eines einstückig gebildeten Absorberrohrs gestattet und gleichzeitig die Probleme der Längenkontraktion kostengünstig und effizient löst.

Die Lösung dieses Problems gelingt durch das Receivertragwerk gemäß den Merkmalen des Hauptanspruchs. Weitere sinnvolle Ausgestaltungen des Receivertragwerks können aus den Merkmalen der Unteransprüche gewonnen werden.

Erfindungsgemäß wird ein einstückiges Absorberrohr auf einem Receivertragwerk so aufgeständert, dass der Receiver lediglich auf dem Tragwerk aufliegt. Der Receiver ist auf seiner Aufständerung zunächst vollständig in Richtung seiner Längserstreckung durch Gleitlagerung beweglich gehalten, indem den Receiverständern Gleitelemente zugeordnet sind, auf denen der Receiver aufliegt. Kommt es in dieser Situation zu einer Längenausdehnung, etwa aufgrund steigender Temperaturen im Absorberrohr, so kann sich dieses dehnen, wobei die aufgrund der Dehnung bewegten Rohrabschnitte auf den Gleitelementen in Richtung der Längserstreckung ausweichen können. Es kann somit folglich nicht zu Verbiegungen des Rohrs und zu damit verbundenen Beschädigungen kommen.

In konkreter Ausgestaltung ist das Absorberrohr auf einer Reihe von Receiverständern aufgelagert, welche in im Wesentlichen gleichen Abständen zueinander aufgestellt sind. Sie definieren die Lage des Receiverrohrs, auf welches die Heliostaten des solarthermischen Kraftwerks exakt ausgerichtet sein müssen. Eine gleichmäßige Auflagerung des Absorberrohrs ist daher von besonderer Wichtigkeit.

Es hat sich als besonders vorteilhaft erwiesen, die Gleitelemente den Receiverständern paarweise zuzuordnen. Dabei ist der Receiverständer an dem bestimmungsgemäß oberen Ende, das ist das Ende auf dem der Receiver aufgelagert wird, beispielsweise Y-förmig in zwei Schenkel aufgespalten. An den Innenschenkeln sind die Gleitelemente angebracht. Der Receiver wird in die Aufgabelung eingelegt und liegt darin lediglich auf den Gleitflächen der Gleitelemente auf. Durch die Verwendung zweier, bezüglich der Hochachse des Receiverständers spiegelbildlich zueinander angeordneten Gleitelemente wird gewährleistet, dass das Absorberrohr nicht nur punktuell aufliegt, sondern bezüglich des Querschnitts mithilfe der Schwerkraft in einer definierten Position gehalten ist.

Dies kann durch ein oder mehrere weitere Gleitelemente ergänzt werden, welche zusätzlich oberhalb des Absorberrohrs so angebracht werden, dass ein Ausweichen des Rohrs auch nach oben nicht möglich ist. Gerade bei Absorberrohren im Bereich von 500 bis 800 Metern kann es bei eventuellen Verklemmungen dazu kommen, dass das Rohr aufgrund seiner Längenausdehnung von den unteren Gleitelementen abgehoben wird. Dies wird durch die oberen Gleitelemente verhindert, die das Rohr in seiner Position durch einen dritten Haltepunkt vollständig fixieren.

Mit Vorteil handelt es sich bei den Gleitelementen um Anordnungen, welche aus jeweils zumindest einer Rolle besteht. Diese Rollen sind auf Achsen gelagert und vermeiden dadurch, dass bei dieser Lösung kaum Reibung an der Oberfläche des Absorberrohrs auftritt, eine Beschädigung der relativ empfindlichen Beschichtung des Receivers.

Die Längenausdehnung des Absorberrohrs ist am besten kontrollierbar, wenn an einem vorgegebenen Punkt in der Längserstreckung des Receivers dieser am Receivertragwerk, an einem Fixträger, fixiert ist. So bleibt das Rohr dauerhaft an einer festen Stelle und die Längenausdehnung und -kontraktion ist leichter handhabbar, da die bewegten Enden des Rohrs um definierbare Punkte herum oszillieren.

In wiederum vorteilhafter Ausgestaltung ist der Fixträger endständig, so dass die Oszillation des freien Endes lediglich in eine Richtung auftritt.

Es wird mit Vorteil zur Fixierung die Seite des Absorberrohrs gewählt, die in Stromrichtung des Mediums stromaufwärts liegt. In diesem Bereich ist somit die Beweglichkeit geringer. Die empfindliche Beschichtung des Receivers ist insbesondere im heißen Zustand besonders empfindlich, so dass es vorteilhaft ist, die heißere Seite des Receivers zu fixieren. Zudem wird an der heißen Seite das Medium abgenommen, was ebenfalls in fixiertem Zustand leichter möglich ist.

Zur Zuführung des Mediums wird auf der dem Fixträger gegenüberliegenden Seite des Receivers ein Panzerschlauch angeflanscht, über welchen dem System das Wärmeträgermedium zuführt. Der flexible Schlauch passt sich problemlos an die Längenausdehnung des Systems an, ist seinerseits jedoch auch nicht durch das Medium erwärmt, das erst im Laufe des Durchfließens des Receivers seine Wärmeenergie aufnimmt.

Die vorstehend beschriebene Erfindung wird nachfolgend anhand einer schematischen Zeichnung näher erläutert.

Es zeigt:

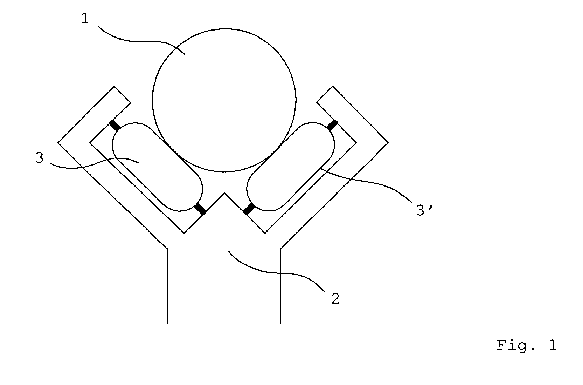

- Figur 1: einen Receiverträger aus einem erfindungsgemäßen Receivertragwerk in einem Querschnitt durch das Absorberrohr.

Figur 1 zeigt einen Receiverträger 2, auf dem ein Absorberrohr 1 aufgelagert ist. Es handelt sich bei dem Absorberrohr 1 um ein einstückiges Absorberrohr von einer Länge von 200 bis 800 Metern. Zur Zwischenlage zwischen Absorberohr 1 und Receiverträger 2 sind zwei Gleitelemente 3,3' vorgesehen, auf welchen das Absorberrohr aufgelagert ist. Bei den Gleitelementen 3,3' handelt es sich um Rollen, die auf ihrer Achse drehbar so gelagert sind, dass eine Drehung in Richtung der Längserstreckung des Absorberrohrs ermöglicht ist. Eine Mehrzahl von Receiverträgern sind in einer Reihe hintereinander so aufgestellt, dass das darauf liegende Absorberrohr 1 im Ganzen erhöht aufgeständert ist. Diese Mehrzahl von Receiverträgern 2 bildet gemeinsam das Receivertragwerk.

Der Receiver, welcher aus einem Absorberrohr 1 und einer hier nicht näher interessierenden Sekundärspiegelanordnung besteht, ist in einer erhöhten Position über einem Heliostatenfeld aufzuständern. Die Heliostaten reflektieren das auf sie einfallende Sonnenlicht und bündeln es auf das Absorberrohr 1. Die deshalb notwendige, definierte Position wird durch die Anordnung zweier schräg angestellter Gleitelemente 3,3' gewährleistet, welche das Absorberrohr 1 mithilfe der Schwerkraft in einer von ihnen gebildeten Senke halten. Gleichzeitig ist der jeweils von den Gleitelementen 3,3' getragene Rohrabschnitt beweglich, nämlich in Richtung der Längserstreckung des Absorberrohrs 1 verschiebbar. Durch die bewegliche Auflagerung können temperaturbedingte Längenausdehnungen des Absorberrohrs 1, die aufgrund der Bündelung des Sonnenlichts auf das Rohr im Bereich von zwei Metern liegen, einfach von der Konstruktion aufgenommen werden.

Das Absorberrohr 1 ist dabei an einem endständigen Fixständer fest mit der Anordnung verbunden, so dass die Längenausdehnung lediglich von diesem Fixständer weg gerichtet sein kann. Auf der Seite des Fixständers befindet sich die Senke des Energie tragenden Mediums, welches das Rohr durchfließt. Die bei großer Hitze besonders empfindliche Beschichtung des Absorberrohrs 1 wird dabei besonders dadurch geschont, dass der Bereich der größten Hitze, nämlich die Senke des Energie tragenden Mediums, auf diese Weise am wenigsten über die Gleitelemente bewegt wird.

Auf Seiten der Quelle des Mediums wird dieses dem Absorberrohr 1 mittels eines Panzerschlauchs zugeführt. Der bewegliche Panzerschlauch kann den Längenänderungen des Absorber-rohrs 1 ohne Weiteres nachgeführt werden, so dass der Kreislauf zur Energiegewinnung stets geschlossen bleiben kann.

Vorstehend ist somit ein Receivertragwerk beschrieben, welches durch eine schwimmende Auflagerung des Receivers in seiner erhöhten Position ideal auf die Längenänderungen des Receivers reagieren kann und somit die Effizienz üblicher Lösungen verbessert und gleichzeitig Kosten spart.

### BEZUGSZEICHENLISTE

- 1: Absorberrohr
- 2: Receiverträger
- 3,3': Gleitelemente

## Patentansprüche

1. Receivertragwerk zur erhöhten Aufständerung eines im Wesentlichen einstückigen Absorberrohrs (1) gegenüber einer Mehrzahl von Heliostaten innerhalb eines solarthermischen Kraftwerks, wobei das Receivertragwerk aus einem oder mehreren Receiverträgern (2) gebildet ist und den Receiverträgern jeweils ein oder mehrere Gleitelemente (3,3') zugeordnet sind, wobei das Absorberrohr (1) zumindest nahezu vollständig auf diesen Gleitelementen (3,3') aufgelagert ist.

2. Receivertragwerk gemäß Anspruch 1, **dadurch gekennzeichnet, dass** es aus einer Mehrzahl von Receiverträgern gebildet ist, welche in näherungsweise gleichmäßigen Abständen entlang der Längserstreckung des Absorberrohrs angeordnet sind.

3. Receivertragwerk gemäß einem der Ansprüche 1 oder 2, **dadurch gekennzeichnet, dass** die Gleitelemente jeweils paarweise so angeordnet sind, dass ihre Gleitflächen tangential zum Querschnitt des Absorberrohrs ausgerichtet sind, wobei der Vektor der Gewichtskraft des Absorberrohrs eine gedachte Spiegelachse darstellt, bezüglich derer die Gleitelemente wenigstens näherungsweise spiegelbildlich zueinander angeordnet sind.

4. Receivertragwerk gemäß Anspruch 3, **dadurch gekennzeichnet, dass** den Receiverträgern jeweils zumindest ein zusätzliches Gleitelement zugeordnet ist, welches bezüglich der bestimmungsgemäßen Einbaulage des Absorberrohrs oberhalb angeordnet ist.

5. Receivertragwerk gemäß einem der vorhergehenden Ansprüche, **dadurch gekennzeichnet, dass** die Gleitelemente jeweils aus zumindest einer auf einer Achse gelagerten Rolle hergestellt sind.

6. Receivertragwerk gemäß einem der vorhergehenden Ansprüche, **dadurch gekennzeichnet, dass** das Absorberrohr an einer Stelle seiner Längserstreckung mit einem Fixträger fest verbunden ist.

7. Receivertragwerk gemäß Anspruch 6, **dadurch gekennzeichnet, dass** der Fixträger endständig ist.

8. Receivertragwerk gemäß Anspruch 7, **dadurch gekennzeichnet, dass** das Absorberrohr (1) eine Heißseite und eine Kaltseite aufweist, wobei die Heißseite in Strömungsrichtung eines durch das Absorberrohr (1) strömenden Mediums liegt, und der Fixträger auf der Heißseite angeordnet ist.

9. Receivertragwerk gemäß einem der Ansprüche 6 oder 7, **dadurch gekennzeichnet, dass** das Medium an der dem Fixträger gegenüberliegenden Seite des Absorberrohrs über einen Panzerschlauch zugeführt wird.
